# EUROPEAN PATENT SPECIFICATION

(11) **EP 3 873 029 B1**
(45) Date of publication and mention of the grant of the patent: **10.09.2025**
(21) Application number: 19875109.1
(22) Date of filing: 22.10.2019
(51) Int. Cl.: H04L 41/0853, H04L 41/0873, H04W 24/04

(54) **PORT CONFIGURATION DETECTION METHOD, TERMINAL, AND COMPUTER-READABLE STORAGE MEDIUM**
ANSCHLUSSKONFIGURATIONSDETEKTIONSVERFAHREN, ENDGERÄT UND COMPUTERLESBARES SPEICHERMEDIUM
PROCÉDÉ DE DÉTECTION DE CONFIGURATION DE PORT, TERMINAL ET SUPPORT D'INFORMATIONS LISIBLE PAR ORDINATEUR

(30) Priority: 22.10.2018 CN 201811232527
(43) Date of publication of application: 01.09.2021
(73) Proprietor: ZTE Corporation, Shenzhen, Guangdong 518057 (CN)
(72) Inventor: LIN, Jie, Shenzhen, Guangdong 518057 (CN); LIU, Yuanyuan, Shenzhen, Guangdong 518057 (CN)
(74) Representative: Deambrogi, Edgardo
(86) International application number: PCT/CN2019/112536
(87) International publication number: WO 2020/083285

(56) References cited:
- EP-A1- 3 447 974
- EP-A1- 3 531 643
- WO-A1-2017/202158
- WO-A1-2018/121224
- CN-A- 108 075 903
- CN-A- 108 243 035
- CN-A- 108 419 259
- US-A1- 2014 226 461
- US-A1- 2017 005 742
- OIF: "IA OIF-FLEXE-01.0 Flex Ethernet Implementation Agreement", 1 March 2016 (2016-03-01), pages 1 - 31, XP055459137, Retrieved from the Internet <URL:http://www.oiforum.com/wp-content/uploads/OIF-FLEXE-01.0.pdf> [retrieved on 20180314]
- HUAWEI TECHNOLOGIES CO., LTD.; CHINA TELECOM GUANGZHOU RESEARCH INSTITUTE: "灵活以太网技术白皮书 (2018版) (Non-official translation: White Paper of FlexE Technology (2018 Edition))", 25 September 2018 (2018-09-25), XP055708238, Retrieved from the Internet <URL:https://www.huawei.com/cn/press-events/news/2018/9/huawei-release-flexible-ethernet-whitepaper>

## Description

### Technical Field

Embodiments of the present disclosure relate to the technical field of communications, and more particularly, to a port configuration detection method, a terminal, and a computer-readable storage medium.

### Background

A Flexible Ethernet (FlexE) technology is initiated by an Optical Internetworking Forum (OIF) and provides a general mechanism to transport a series of different Media Access Control (MAC) rate services, either single larger-MAC rate services or a set of multiple smaller-MAC rate services, no longer limited to single MAC rate services.

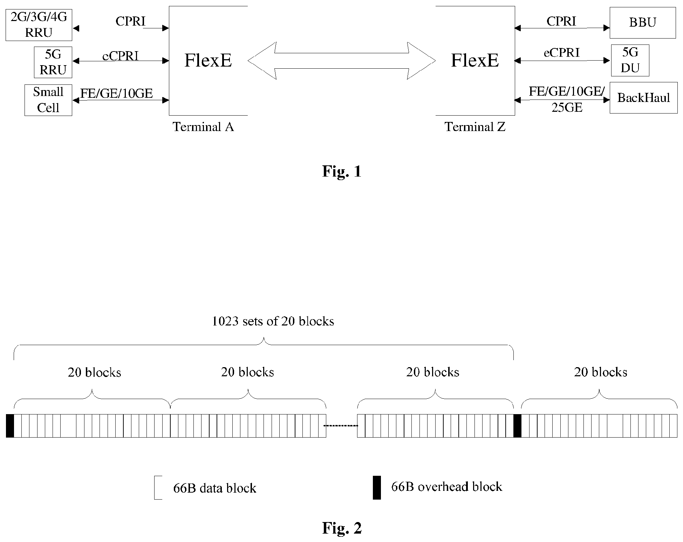

A Common Public Radio Interface (CPRI) is used for various wireless network systems, such as a Global System for Mobile Communication (GSM), a Code Division Multiple Access (CDMA2000), a Long Term Evolution (LTE). Key standards are set for interface transmission, connection and control communication between Radio Equipment Control (REC) (i.e. a Base Band Unit (BBU) in the LTE system) and Radio Equipment (RE) (i.e. a Radio Remote Unit (RRU) in the LTE system). A typical networking of bearer devices deployed for a 5G fronthaul network is shown in Fig. 1. In order to ensure normal transmission of data, the configuration of an access port of a terminal A is the same as the attribute of a port of a terminal Z, so that a service signal can be recovered. However, in the existing protocol, the management function for the CPRI is still relatively weak, no specification is provided for checking the port configurations of terminal A and terminal Z, and when the configurations for terminal A and terminal Z are inconsistent, a communication alarm cannot be given.

US 2017/0005742 A1 discloses a Flexible Ethernet (FlexE) switch system, which is configured to switch a FlexE client service and includes interface circuitry configured to ingress and egress a plurality of FlexE clients. WO 2017/202158 A1 discloses a method and device for forwarding data.

### Summary

Embodiments of the present disclosure provide a port configuration detection method, a terminal, and a computer-readable storage medium, which can solve the problem in the conventional art that means for CPRI port configuration management is absent, and port configurations for two terminals cannot be checked.

The present disclosure is defined by the appended set of claims.

The beneficial effects of the embodiments of the present disclosure are as follows.

A port configuration detection method, a terminal, and a computer-readable storage medium are provided in the embodiments of the present disclosure. First port attribute information of a CPRI port of a first terminal is acquired; the first port attribute information of the CPRI port is added to a FlexE overhead frame in a first service flow; and the first service flow is sent to a second terminal. Therefore, by adding port attribute information to service flows, the second terminal can perform comparison according to the port attribute information in the service flows upon receiving the service flows and can give an alarm once there is a mismatching in the port attribute information in the service flows, thereby achieving detection and alarming of port configuration.

Other features and corresponding beneficial effects of the embodiments of the present disclosure are set forth in the description which follows, and it is to be understood that at least part of the beneficial effects will be apparent from the description of the present disclosure.

### Brief Description of the Drawings

Fig. 1 is a schematic diagram of typical networking of existing bearer devices deployed for a 5G fronthaul network;
Fig. 2 is a schematic diagram of a position of an overhead frame in a service flow;
Fig. 3 is a schematic structural diagram of an overhead frame;
Fig. 4 is a flowchart of a port configuration detection method;
Fig. 5 is a schematic structural diagram of an extended overhead frame in some embodiments;
Fig. 6 is a flowchart of a port configuration detection method;
Fig. 7 is a flowchart of a port configuration detection method;
Fig. 8 is a schematic diagram of a networking structure;
Fig. 9 is a schematic composition diagram of a port configuration detection device;
Fig. 10 is a schematic composition diagram of a port configuration detection device;
Fig. 11 is a schematic composition diagram of a port configuration detection device; and
Fig. 12 is a schematic composition diagram of a terminal.

### Detailed Description of the Embodiments

FlexE differs from a conventional Ethernet structure in that FlexE has a FlexE shim on a MAC layer and a Physical Coding Sublayer (PCS), the function of the shim is to construct a Calendar with the size of 20*n 66-bit (66B) blocks, n is the number of bound Ethernet Physical Layers (PHY), and each 66B block represents one 5G slot. On a multiplexing side, services with different MAC rates are loaded into a corresponding number of 66B blocks according to a multiplication relation with respective to 5G. On a demultiplexing side, a corresponding customer service is extracted from the corresponding number of 66B blocks according to a mapping relation stored in an overhead. A position of an overhead frame in a service flow is as shown in Fig. 2.

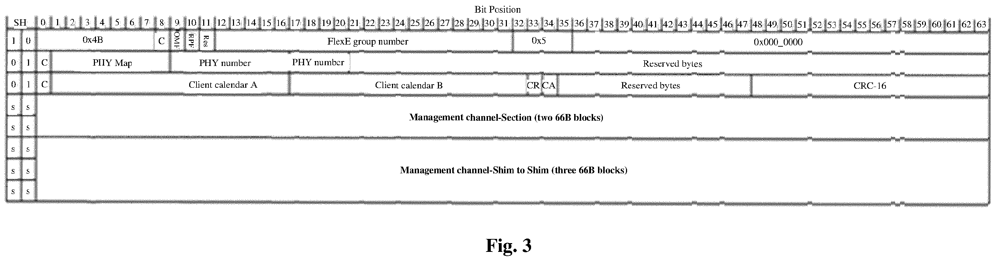

FlexE uses an overhead frame to implement mapping and demapping at both terminals of FlexE transmission, alignment between different PHYs joining the FlexE Group, configuration check at both terminals of FlexE transmission, remote defect indication, Cyclic Redundancy Check (CRC), etc. One overhead frame consists of eight overhead blocks, and a frame structure of the overhead frame is as shown in Fig. 3. The overhead block is a 66-bit (66B) overhead block that is inserted every 1023*20 data blocks when a service data flow is sent. The overhead block plays a positioning function in the whole service flow, and the position of a first data block group and the position of a subsequent data block group in the service can be known as long as the overhead block is found. One overhead block consists of a 2-bit (2B) block flag and a 64-bit (64B) block content. The block flag is located in the first 2 columns, followed by 64 columns of block content. The block flag for the first overhead block is 10, and the block flag for the subsequent 7 overhead blocks is 01 or SS (SS indicates uncertain content). The flag for the first overhead block is 0x4B and 0x5. During the reception, when the corresponding positions in an overhead block are found to be 0x4B and 0x5, it represents that this overhead block is the first overhead block in the overhead frame, the first overhead block and 7 consecutive overhead blocks after the first overhead block constitute one overhead frame. In the overhead frame, a reserved portion is provided for customization.

A CPRI is used for various wireless network systems (GSM, CDMA2000, LTE, etc.), and key standards are set for interface transmission, connection and control communication between REC (i.e. a BBU in an LTE system) and RE (i.e. an RRU in the LTE system). In an application scenario of a 5G fronthaul network, a bearer device is connected between an RRU and a BBU to transmit a fronthaul service, and a CPRI is accessed to a client of FlexE for transmission. The CPRI directly terminates the codes of a PCS at layer L1 without Ethernet simulation and then performs regeneration or conversion, so that a PCS coding rule of a FlexE Client is met. The CPRI is mapped into FlexE according to an encapsulation format shown in Fig. 3 and transmitted in a slot of a FlexE Shim. The latest version for the current CPRI system is Release 7.0. To achieve the flexibility required by the system, the CPRI defines a number of different line bit rates, see Table 1.

**Table 1**

| Option | Line bit rate | Option | Line bit rate |
|---|---|---|---|
| Option 1 | 614.4 Mbps | Option 6 | 6144.0 Mbps |
| Option 2 | 1228.8 Mbps (2*614.4 Mbps) | Option 7 | 9830.4 Mbps |
| Option 3 | 2457.6 Mbps (4*614.4 Mbps) | Option 8 | 10137.6 Mbps |
| Option 4 | 3072.0 Mbps (5*614.4 Mbps) | Option 9 | 12165.12 Mbps |
| Option 5 | 4915.2 Mbps (8*614.4 Mbps) | Option 10 | 24330.24 Mbps |

In an application scenario of a 5G fronthaul network, besides a CPRI already used between an RRU of 2G/3G/4G and a BBU, an eCPRI (belonging to a new Ethernet interface) used between an RRU and a DU and a GE interface of a small base station exist at the same time. If FlexE-capable bearer devices are used for fronthaul, it is necessary to have both the ability of transmission by taking an eCPRI with Ethernet service characteristics as a FlexE Client and the ability of transmission by taking a CPRI with a specific CBR service as a FlexE Client. In practical applications, different encapsulations may be deployed to the CPRI to uniformly bear multiple types of services. When an Ethernet service is transmitted, an eCPRI encapsulation type is deployed for the CPRI, and when a CBR service is transmitted, a CPRI encapsulation type is deployed for the CPRI. Although the encapsulation types are different, the FlexE Client needs to be accessed for transmission.

In order to make the purposes, technical solutions and advantages of the present disclosure clearer, the embodiments of the present disclosure will be further described in detail below with reference to various implementations and the accompanying drawings. It is to be understood that the embodiments described herein are merely illustrative of the present disclosure and are not intended to limit the present disclosure.

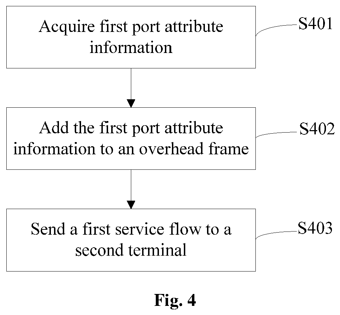

Referring to Fig. 4, Fig. 4 is a flowchart of a port configuration detection method. The method includes operations S401 to S403.

In S401, first port attribute information of a CPRI port of a first terminal is acquired.

In S402, the first port attribute information of the CPRI port is added to a FlexE overhead frame in a first service flow.

In S403, the first service flow is sent to a second terminal.

In some embodiments, the operation that the first port attribute information of the CPRI port is added to a FlexE overhead frame in a first service flow may be implemented in a following manner. An extended field with a size of a preset number of bits is set in a reserved field of any overhead block of the FlexE overhead frame; and the first port attribute information is written into the extended field.

In consideration of that an overhead frame is used for positioning service data in a FlexE protocol, a frame structure includes a management channel and has a data management function, so that a plurality of bits may be expanded in a FlexE overhead frame structure to serve as a port attribute negotiation field of a CPRI port.

In some embodiments, the first port attribute information of the CPRI port may include at least one of: a port encapsulation type of the first terminal and an optical port line rate of the first terminal. The types of first port attribute information and second port attribute information are the same, except that terminals represented by the first port attribute information and the second port attribute information are different. The first port attribute information is port attribute information of the first terminal, and the second port attribute information is port attribute information of the second terminal. Accordingly, a port encapsulation type of the first terminal and an optical port line rate of the first terminal are to be understood in a similar way.

In some embodiments, the operation that the first port attribute information is written into the extended field may be implemented in the following manner. A port identification number of a local terminal, the first port attribute information and a port configuration sequence number of the local terminal are written into the extended field in sequence. The port identification number refers to a unique port identifier of a current terminal, and the port identification numbers of different ports are also different. The port configuration sequence number refers to the reflection of a port configuration condition of the current terminal. For example, the port configuration sequence number of the local terminal may be incremented each time the first port attribute information of the CPRI port of the first terminal is updated. That is, each time the port configuration information of the local terminal is updated, the port configuration sequence number in the extended field is incremented, typically by 1. Therefore, the updating iteration condition of the port configuration information of the local terminal can be known based on the port configuration sequence number, and a mapping between the local terminal and a remote terminal can be performed based on the port configuration sequence number. The local terminal and the remote terminal in each embodiment of the present disclosure refer to the first terminal and the second terminal, and the local terminal and the remote terminal respectively correspond to the corresponding first terminal and second terminal according to which role the current terminal is playing.

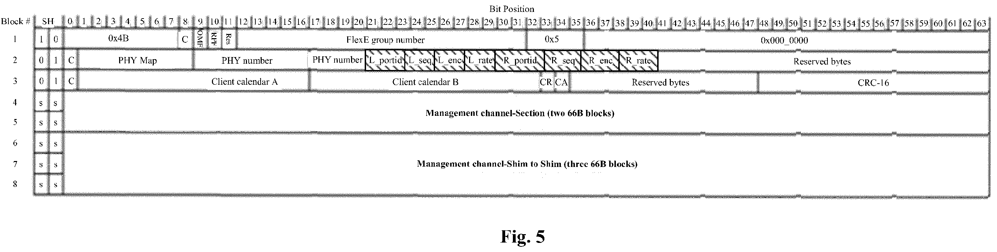

According to an exemplary implementation of the extended field, a plurality of bits may be extended to serve as extended fields at the position of a reserved field of a second overhead block in an overhead frame structure, and the extended fields are used for sequentially carrying a port identification number of a local terminal, a port configuration sequence number of the local terminal and port configuration information of the local terminal, and may additionally be used for carrying a port identification number of a remote terminal, a configuration sequence number of the remote terminal and port configuration information of the remote terminal. The port identification number occupies 4 bits, the port configuration sequence number occupies 2 bits, and in the port configuration information, the port encapsulation type occupies 2 bits and the optical port line rate occupies 2 bits, so that the extended field may at least include 20 bits. Referring to Fig. 5, Fig. 5 is a schematic structural diagram of an extended FlexE protocol overhead frame in some embodiments. Table 2 shows value information for each field in the FlexE protocol frame of Fig. 5.

**Table 2**

| Field name | Field definition | Field value |
|---|---|---|
| L_portid | Port identification number of the local terminal | Rack number 1b + Slot number 1b + Sub-slot number 1b + Port number 1b |
| L_seq | Port configuration sequence number of the local terminal | An initial value of the sequence number is 1, and the sequence number is incremented by 1 each time a port configuration of the local terminal is modified |
| L_enc | Port encapsulation type of the local terminal | cpri:1; ecpri:2 |
| L_rate | Optical port line rate of the local terminal | option5: 1; option6: 2; option7: 3; option8: 4; option9: 5; option10: 6; 10Gbps: 7; 25Gbps: 8 |
| R_portid | Port identification number of the remote terminal | Rack number 1b + Slot number 1b + Sub-slot number 1b + Port number 1b |
| R_seq | Port configuration sequence number of the remote terminal | An initial value of the sequence number is 1, and the sequence number is incremented by 1 each time a port configuration of the remote terminal is modified |
| R_enc | Port encapsulation type of the remote terminal | cpri:1; ecpri:2 |
| R_rate | Optical port line rate of the remote terminal | option5: 1; option6: 2; option7: 3; option8: 4; option9: 5; option10: 6; 10Gbps: 7; 25Gbps: 8 |

If the first terminal sends a service flow to the second terminal for the first time, since the port information of the remote terminal, i.e. the second terminal, is not known yet, an invalid value may be filled in the corresponding port identification number, port configuration sequence number and port configuration information of the remote terminal. The overhead frame is sent out through a PHY.

After the first service flow is sent to the second terminal, the method further includes the following operation:

A second service flow sent by the second terminal is received; in a case where a configuration detection strategy is met, second port attribute information of a CPRI port in a FlexE overhead frame in the second service flow is compared with the first port attribute information of the CPRI port of the first terminal; and in a case where the first port attribute information is inconsistent with the second port attribute information, an alarm is generated. In some embodiments, the method may further include the following operations. The local terminal may send the service flow in which the port attribute information of the local terminal is written, and may alternatively or additionally receive the service flow in which the port attribute information of the remote terminal is written, i.e. the second service flow, sent by the remote terminal. The local terminal and the remote terminal play different roles during a communication interaction, but the hardware configuration, software program and other contents of the local terminal and the remote terminal are unlimited and the functions for the local terminal and the remote terminal are generally consistent. In other words, when the first terminal receives the second service flow sent by the second terminal, the second port attribute information in the second service flow may be compared, and the object of comparison is the port attribute information of the local terminal, i.e. the first port attribute information. In the comparison process, whether the first port attribute information is consistent with the second port attribute information or not is judged, if the first port attribute information is inconsistent with the second port attribute information, an alarm is generated to inform an operator to adjust the port attribute information in time to avoid packet loss.

Since the port attribute information may include at least one of a port encapsulation type and an optical port line rate, the judgment of port attribute information consistency is also based on the port encapsulation type and the optical port line rate, respectively. If the port encapsulation types are consistent and the optical port line rates are consistent, the first port attribute information and the second port attribute information are considered to be consistent. If the port encapsulation types are inconsistent and/or the optical port line rates are inconsistent, the first port attribute information and the second port attribute information are considered to be inconsistent, and an alarm is generated.

In some embodiments, it is unnecessary to compare the port attribute information of both terminals at all times. In some exemplary implementations, the configuration detection strategy in the some embodiments includes at least one of the following:
port attribute information of a remote terminal is received for the first time;
port attribute information of a remote terminal is received for the first time after port attribute information of a local terminal is modified; and
a port configuration sequence number, contained in a service flow, of a remote terminal is inconsistent with a port configuration sequence number, which is cached locally, of the remote terminal.

When the port attribute information of the remote terminal is received for the first time, it represents that the remote terminal sends a service flow to the local terminal for the first time, and the port attribute information needs to be compared to judge whether the port attribute information of the local terminal and the port attribute information of the remote terminal are consistent because no interaction has been conducted before. Similarly, after the port attribute information of the local terminal is modified, the port attribute information of the local terminal may not be consistent with the port attribute information which has been interacted with the remote terminal before, and when the port attribute information of the remote terminal is received for the first time after such modification, the port attribute information may be compared. Alternatively, when the received port configuration sequence number of the remote terminal is inconsistent with the port configuration sequence number, which is cached locally, of the remote terminal, it represents that the configuration sequence number of the remote terminal is updated, and the port attribute information of the local terminal and the port attribute information of the remote terminal which are consistent before become inconsistent, and in such a case, the port attribute information of both terminals may be compared.

According to the port configuration detection method, first port attribute information of a CPRI port of a first terminal is acquired; the first port attribute information of the CPRI port is added to a FlexE overhead frame in a first service flow; and the first service flow is sent to a second terminal. Therefore, by adding port attribute information to service flows, the second terminal can perform comparison according to the port attribute information in the service flows upon receiving the service flows and can give an alarm once there is a mismatching in the port attribute information in the service flows, thereby achieving detection and alarming of port configuration.

In some implementations, the process that the first terminal sends the first service flow to the second terminal is implemented through a relay terminal. That is, the first terminal sends the first service flow to a relay terminal, and the relay terminal processes the first service flow and then transfers the first service flow to the second terminal. In some exemplary implementations, on the relay terminal side, the flow of port configuration detection is as follows:
a first service flow sent by a first terminal is received, wherein a FlexE overhead frame of the first service flow is added with first port attribute information of a CPRI port of the first terminal;
the FlexE overhead frame in the first service flow is parsed to determine the first port attribute information of the CPRI port of the first terminal; and
slot crossing is performed to form a new overhead frame, the first port attribute information is added to the new overhead frame, and the new overhead frame is sent to a second terminal.

In some implementations, the new overhead frame is sent by taking the first service flow as a carrier, and the FlexE overhead frame in the first service flow is processed to form the new overhead frame.

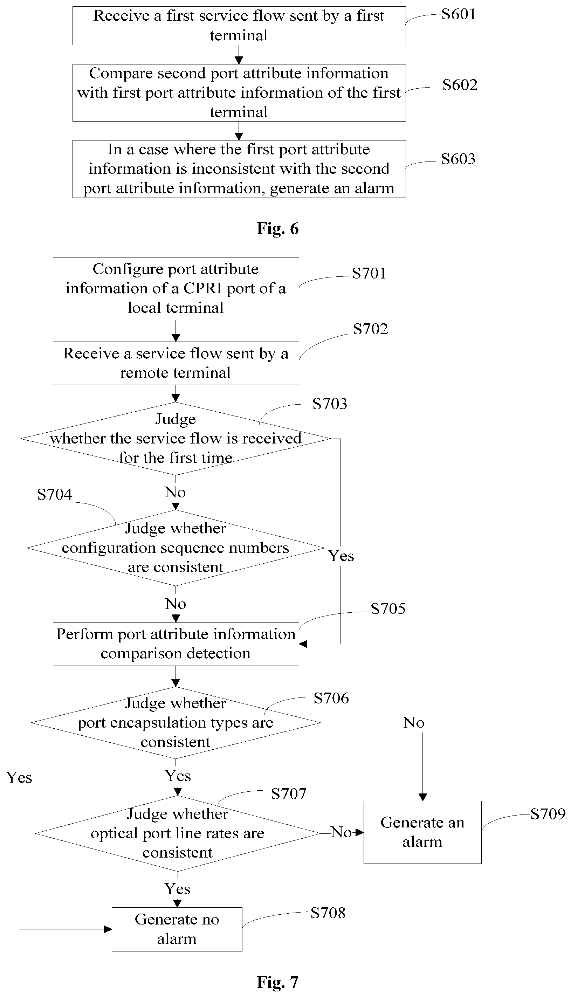

Referring to Fig. 6, Fig. 6 is a flowchart of a port configuration detection method. The method includes operations S601 to S603.

In S601, a first service flow sent by a first terminal is received, wherein a FlexE overhead frame of the first service flow is added with first port attribute information of a CPRI port of the first terminal.

In S602, in a case where a configuration detection strategy is met, second port attribute information is compared with the first port attribute information of the CPRI port of the first terminal.

In S603, in a case where the first port attribute information is inconsistent with the second port attribute information, an alarm is generated.

The local terminal may send the service flow in which the port attribute information of the local terminal is written, and may alternatively or additionally receive the service flow in which the port attribute information of the remote terminal is written, i.e. the second service flow, sent by the remote terminal. The local terminal and the remote terminal may play different roles during a communication interaction, but the hardware configuration, software program and other contents of the local terminal and the remote terminal are unlimited and the functions for the local terminal and the remote terminal are generally consistent.

Since the port attribute information may include at least one of a port encapsulation type and an optical port line rate, the judgment of port attribute information consistency is also based on the port encapsulation type and the optical port line rate, respectively. If the port encapsulation types are consistent and the optical port line rates are consistent, the first port attribute information and the second port attribute information are considered to be consistent. If the port encapsulation types are inconsistent and/or the optical port line rates are inconsistent, the first port attribute information and the second port attribute information are considered to be inconsistent, and an alarm is generated.

In some embodiments, it is unnecessary to compare the port attribute information of both terminals at all times. In some exemplary implementations, the configuration detection strategy in the some embodiments includes at least one of the following:
port attribute information of a remote terminal is received for the first time;
port attribute information of a remote terminal is received for the first time after port attribute information of a local terminal is modified; and
a port configuration sequence number, contained in a service flow, of a remote terminal is inconsistent with a port configuration sequence number, which is cached locally, of the remote terminal.

When the port attribute information of the remote terminal is received for the first time, it represents that the remote terminal sends a service flow to the local terminal for the first time, and the port attribute information needs to be compared to judge whether the port attribute information of the local terminal and the port attribute information of the remote terminal are consistent because no interaction has been conducted before. Similarly, after the port attribute information of the local terminal is modified, the port attribute information of the local terminal may not be consistent with the port attribute information which has been interacted with the remote terminal before, and when the port attribute information of the remote terminal is received for the first time after such modification, the port attribute information may be compared. Alternatively, when the received port configuration sequence number of the remote terminal is inconsistent with the port configuration sequence number, which is cached locally, of the remote terminal, it represents that the configuration sequence number of the remote terminal is updated, and the port attribute information of the local terminal and the port attribute information of the remote terminal which are consistent before become inconsistent, and in such a case, the port attribute information of both terminals may be compared.

According to the port configuration detection method, a first service flow sent by a first terminal is received, a FlexE overhead frame of the first service flow is added with first port attribute information of a CPRI port of the first terminal, in a case where a configuration detection strategy is met, second port attribute information is compared with the first port attribute information of the CPRI port of the first terminal, and in a case where the first port attribute information is inconsistent with the second port attribute information, an alarm is generated. Therefore, the second terminal performs comparison according to port attribute information in service flows upon receiving the service flows and gives an alarm once there is a mismatching in the port attribute information in the service flows, thereby achieving detection and alarming of port configuration.

Referring to Fig. 7, Fig. 7 is a flowchart of a port configuration detection method. The method includes operations S701 to S709.

In S701, port attribute information of a CPRI port of a local terminal is configured.

In S702, a service flow sent by a remote terminal is received, wherein an overhead frame in the service flow sent by the remote terminal carries at least port attribute information of a CPRI port of the remote terminal.

In S703, it is judged whether the service flow is received for the first time, if the service flow is received for the first time, the process proceeds to S705, and if the service flow is not received for the first time, the process proceeds to S704.

In S704, it is compared whether a configuration sequence number of the local terminal is consistent with a configuration sequence number, contained in the service flow, of the remote terminal, if the configuration sequence number of the local terminal is consistent with the configuration sequence number, contained in the service flow, of the remote terminal, the process proceeds to S708, and if the configuration sequence number of the local terminal is inconsistent with the configuration sequence number, contained in the service flow, of the remote terminal, the process proceeds to S705.

In S705, port attribute information comparison detection is performed, and the configuration sequence number, which is cached locally, of the remote terminal is updated.

In S706, it is judged whether port encapsulation types are consistent in the port attribute information of the local terminal and the port attribute information of the remote terminal, if the port encapsulation types are consistent in the port attribute information of the local terminal and the port attribute information of the remote terminal, the process proceeds to S707, and if the port encapsulation types are inconsistent in the port attribute information of the local terminal and the port attribute information of the remote terminal, the process proceeds to S709.

In S707, it is judged whether optical port line rates are consistent in the port attribute information of the local terminal and the port attribute information of the remote terminal, if the optical port line rates are consistent in the port attribute information of the local terminal and the port attribute information of the remote terminal, the process proceeds to S708, and if the optical port line rates are inconsistent in the port attribute information of the local terminal and the port attribute information of the remote terminal, the process proceeds to S709.

In S708, no alarm is generated.

In S709, an alarm is generated.

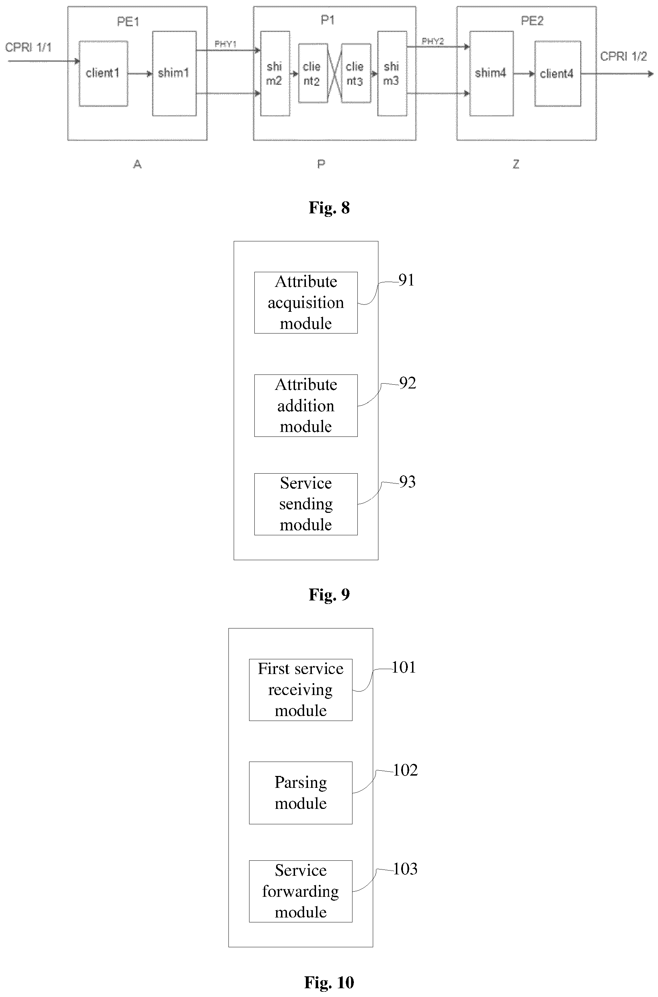

Referring to Fig. 8, Fig. 8 is a schematic diagram of a networking structure.

A PE1 node at terminal A accesses a CPRI service, a service bandwidth is 10G, and an access port is cpri1/1. The PE1 node allocates 10G for the CPRI service for a client and carries the CPRI service to a PHY of FlexE Group 1. A P1 node and a PE2 node transfer the CPRI service on the FlexE Group, the PE2 node serves as terminal Z which recovers a service signal.

In S801, the PE1 node at terminal A configures a FlexE Group, adds the FlexE Group to PHY1, configures a FlexE Shim group (Shim1) for the FlexE Group, and allocates a client (client1). The access side selects an encapsulation type (CPRI type) for the port cpri1/1, sets an optical port linear rate of cpri1/1 as option7, binds client1 to the port cpri1/1, and allocates two slots for client1.

In S802, an intermediate node P1 needs to allocate two FlexE groups: FlexE Group 1 is added to PHY1, and a client of Shim2 for FlexE Group 1 is configured to be client2; and FlexE Group2 is added to PHY2, and a client of Shim3 for FlexE Group 2 is configured to be client3.

In S803, the PE2 node at terminal Z allocates a FlexE Group, adds the FlexE Group to PHY2, configures a FlexE Shim group (Shim4) for the FlexE Group, and allocates a client4. The access side selects an encapsulation type (CPRI type) for the port cpri1/2, sets an optical port linear rate of cpri1/2 as option7, binds client4 to the port cpri1/2, and allocates two slots for client4.

In S804, terminal A transfers the CPRI service to terminal Z, and the PE1 node at terminal A periodically sends on PHY1 a FlexE overhead, wherein a port identification number 0x1101 of a local terminal, a port configuration sequence number 0x01 of the local terminal, a encapsulation type 0x01 of the local terminal and a optical port line rate 0x03 of the local terminal are inserted into an extended field of the overhead frame. Because the attribute information of an access port of the remote terminal is not known yet, a port identification number of a remote terminal is filled as 0xfffe, a port configuration sequence number of the remote terminal is filled as 0x00, a port encapsulation type of the remote terminal is filled as 0xfe, and optical port line rate data of the remote terminal is filled as 0xfe.

In S805, the P1 node periodically receives the FlexE overhead frame and parses the FlexE overhead frame to obtain the port attribute information of terminal A. After the P1 node completes slot crossing, a new overhead frame is formed and sent to terminal Z. The port attribute information of terminal A is filled into the corresponding extended field when packaging.

In S806, node Z receives the FlexE overhead on PHY4 and parses the port attribute information of the remote terminal. When a complete overhead frame is received for the first time, configuration detection needs to be performed according to a configuration detection strategy, and a locally cached configuration sequence number of the remote terminal is updated to be 0x01. After comparing the configuration of the remote terminal with the configuration of the cpri1/2 of the local terminal, the port types are consistent and the optical port line rate information is also consistent, the signal recovery of node Z is successful, and alarm information is not generated.

In S807, node Z periodically receives the FlexE overhead frame on PHY4 and parses the port attribute information of the remote terminal. Since the received configuration sequence number of the remote terminal is always 0x01 and is consistent with the configuration sequence number cached locally, configuration detection is not needed, and an alarm is not generated.

In S808, an encapsulation type of port cpri1/2 on an access side of the PE2 node at terminal Z is modified to be an eCPRI type, a port rate is set to be 25Gbps, and port cpri1/2 still accesses client1.

In S809, the CPRI service continues to be transferred from terminal A to terminal Z, and the FlexE overhead frame is sent.

In S810, node Z receives the FlexE overhead on PHY4. Since the current frame is the first frame after the configuration is modified, configuration detection needs to be performed, and the information cached locally is updated. The port attribute information of the remote terminal is parsed, and it is detected, by comparing the received configuration with the configuration of the local terminal, that the port types are inconsistent and the rates of the remote terminal and the local terminal are also inconsistent, and node Z generates an access signal mismatch alarm and reports the mismatch alarm to a main controller.

In S811, optionally, the CPRI service is transferred from Z to A. Node Z periodically sends a FlexE overhead on PHY4, wherein port attribute information of the local terminal and the remote terminal are inserted into an extended field of an overhead block, the port attribute information of the local terminal and the remote terminal including the port identification number 0x1102 of the local terminal, the port configuration sequence number 0x02 of the local terminal, the encapsulation type 0x02 of the local terminal and the port rate 0x08 of the local terminal, as well as the port identification number 0x1101 of the remote terminal (terminal A, sometimes also referred to as node A), the configuration sequence number 0x01 of the remote terminal, the encapsulation type 0x01 of the remote terminal and the optical port line rate 0x03 of the remote terminal.

In S812, the P1 node periodically receives the FlexE overhead frame and parses the port attribute information of terminal Z. After the P1 node completes slot crossing, a new overhead frame is formed and sent to terminal A. The port attribute information of terminal Z is filled into the corresponding negotiation field when packaging.

In S813, terminal A receives the FlexE overhead on PHY1. Since the FlexE overhead frame is received for the first time, configuration detection needs to be performed. The port attribute information of the remote terminal is parsed, by comparing the received configuration with the configuration of the cpri1/1 of the local terminal, the port types are inconsistent and rate information is also inconsistent, and terminal A generates an access signal mismatch alarm. In addition, terminal A checks that the port attribute information of the remote terminal in the received overhead frame accords with the configuration of the local terminal, aging updating is not needed, and only the configuration sequence number of the remote terminal cached locally needs to be updated to 0x02.

In S814, terminal A periodically receives the FlexE overhead frame on PHY1. According to the configuration detection strategy, the configuration sequence number in the FlexE overhead frame is consistent with the configuration sequence number cached locally, and therefore configuration detection is not performed.

Referring to Fig. 9, Fig. 9 is a schematic composition diagram of a port configuration detection device. The device includes:
an attribute acquisition module 91, configured to acquire first port attribute information of a CPRI port of a first terminal;
an attribute addition module 92, configured to add the first port attribute information of the CPRI port to a FlexE overhead frame in a first service flow; and
a service sending module 93, configured to send the first service flow to a second terminal.

In some embodiments, the operation that the first port attribute information of the CPRI port is added to a FlexE overhead frame in a first service flow may be implemented in the following manner. An extended field with a size of a preset number of bits is set in a reserved field of any overhead block of the FlexE overhead frame; and the first port attribute information is written into the extended field.

In consideration of that an overhead frame is used for positioning service data in a FlexE protocol, a frame structure includes a management channel and has a data management function, so that a plurality of bits may be expanded in a FlexE overhead frame structure to serve as a port attribute negotiation field of a CPRI port.

In some embodiments, the first port attribute information of the CPRI port may include at least one of: a port encapsulation type of the first terminal and an optical port line rate of the first terminal. The types of first port attribute information and second port attribute information are the same, except that terminals represented by the first port attribute information and the second port attribute information are different. The first port attribute information is port attribute information of a first terminal, and the second port attribute information is port attribute information of a second terminal. Accordingly, a port encapsulation type of the first terminal and an optical port line rate of the first terminal are to be understood in a similar way.

In some embodiments, the operation that the first port attribute information is written into the extended field may be implemented in the following manner. A port identification number of a local terminal, the first port attribute information and a port configuration sequence number of the local terminal are written into the extended field in sequence. The port identification number refers to a unique port identifier of a current terminal, and the port identification numbers of different ports are also different. The port configuration sequence number refers to the reflection of a port configuration condition of the current terminal. For example, the port configuration sequence number of the local terminal may include: the port configuration sequence number of the local terminal is incremented each time the first port attribute information of the CPRI port of the first terminal is updated. That is, each time the port configuration information of the local terminal is updated, the port configuration sequence number in the extended field is incremented, typically by 1. Therefore, the updating iteration condition of the port configuration information of the local terminal can be known based on the port configuration sequence number, and a mapping between the local terminal and a remote terminal can be performed based on the port configuration sequence number. The local terminal and the remote terminal in each embodiment of the present disclosure refer to a first terminal and a second terminal, and the local terminal and the remote terminal respectively correspond to the corresponding first terminal and second terminal according to which role the current terminal is playing.

According to an exemplary implementation of the extended field, a plurality of bits may be extended to serve as extended fields at the position of a reserved field of a second overhead block in an overhead frame structure, and the extended fields are used for sequentially carrying a port identification number of a local terminal, a port configuration sequence number of the local terminal and port configuration information of the local terminal, and may additionally be used for carrying a port identification number of a remote terminal, a configuration sequence number of the remote terminal and port configuration information of the remote terminal. The port identification number occupies 4 bits, the port configuration sequence number occupies 2 bits, and in the port configuration information, the port encapsulation type occupies 2 bits and the optical port line rate occupies 2 bits, so that the extended field may at least include 20 bits.

If the first terminal sends a service flow to the second terminal for the first time, since the port information of the remote terminal, i.e. the second terminal, is not known yet, an invalid value may be filled in the corresponding port identification number, port configuration sequence number and port configuration information of the remote terminal. The FlexE overhead frame is sent out through a PHY.

In some embodiments, after the first service flow is sent to a second terminal, the method may further include that:
a second service flow sent by the second terminal is received; in a case where a configuration detection strategy is met, second port attribute information of a CPRI port in a FlexE overhead frame in the second service flow is compared with the first port attribute information of the CPRI port of the first terminal; and in a case where the first port attribute information is inconsistent with the second port attribute information, an alarm is generated. The local terminal may send the service flow in which the port attribute information of the local terminal is written, and may alternatively or additionally receive the service flow in which the port attribute information of the remote terminal is written, i.e. the second service flow, sent by the remote terminal. The local terminal and the remote terminal play different roles during a communication interaction, but the hardware configuration, software program and other contents of the local terminal and the remote terminal are unlimited and the functions for the local terminal and the remote terminal are generally consistent. In other words, when the first terminal receives the second service flow sent by the second terminal, the second port attribute information in the second service flow may be compared, and the object of comparison is the port attribute information of the local terminal, i.e. the first port attribute information. In the comparison process, whether the first port attribute information is consistent with the second port attribute information or not is judged, if the first port attribute information is inconsistent with the second port attribute information, an alarm is generated to inform an operator to adjust the port attribute information in time to avoid packet loss.

Since the port attribute information may include at least one of a port encapsulation type and an optical port line rate, the judgment of port attribute information consistency is also based on the port encapsulation type and the optical port line rate, respectively. If the port encapsulation types are consistent and the optical port line rates are consistent, the first port attribute information and the second port attribute information are considered to be consistent. If the port encapsulation types are inconsistent and/or the optical port line rates are inconsistent, the first port attribute information and the second port attribute information are considered to be inconsistent, and an alarm is generated.

In some embodiments, it is unnecessary to compare the port attribute information of both terminals at all times. In some exemplary implementations, the configuration detection strategy in the some embodiments includes at least one of the following:
port attribute information of a remote terminal is received for the first time;
port attribute information of a remote terminal is received for the first time after port attribute information of a local terminal is modified; and
a port configuration sequence number, contained in a service flow, of a remote terminal is inconsistent with a port configuration sequence number, which is cached locally, of the remote terminal.

When the port attribute information of the remote terminal is received for the first time, it represents that the remote terminal sends a service flow to the local terminal for the first time, and the port attribute information needs to be compared to judge whether the port attribute information of the local terminal and the port attribute information of the remote terminal are consistent because no interaction has been conducted before. Similarly, after the port attribute information of the local terminal is modified, the port attribute information of the local terminal may not be consistent with the port attribute information which has been interacted with the remote terminal before, and when the port attribute information of the remote terminal is received for the first time after such modification, the port attribute information may be compared. Alternatively, when the received port configuration sequence number of the remote terminal is inconsistent with the port configuration sequence number, which is cached locally, of the remote terminal, it represents that the configuration sequence number of the remote terminal is updated, and the port attribute information of the local terminal and the port attribute information of the remote terminal which are consistent before become inconsistent, and in such a case, the port attribute information of both terminals may be compared.

According to the port configuration detection device, first port attribute information of a CPRI port of a first terminal is acquired; the first port attribute information of the CPRI port is added to a FlexE overhead frame in a first service flow; and the first service flow is sent to a second terminal. Therefore, by adding port attribute information to service flows, the second terminal can perform comparison according to the port attribute information in the service flows upon receiving the service flows and can give an alarm once there is a mismatching in the port attribute information in the service flows, thereby achieving detection and alarming of port configuration.

In some implementations, a port configuration detection device, i.e., a relay terminal is also provided. Referring to Fig. 10, the process that the first terminal sends the first service flow to the second terminal is implemented through the relay terminal. That is, the first terminal sends the first service flow to the relay terminal, and the relay terminal processes the first service flow and then transfers the first service flow to the second terminal. In some exemplary implementations, the relay terminal includes:
a first service receiving module 101, configured to receive a first service flow sent by a first terminal, wherein a FlexE overhead frame of the first service flow is added with first port attribute information of a CPRI port of the first terminal;
a parsing module 102, configured to parse the FlexE overhead frame in the first service flow to determine the first port attribute information of the CPRI port of the first terminal; and
a service forwarding module 103, configured to perform slot crossing to form a new overhead frame, add the first port attribute information to the new overhead frame, and send the new overhead frame to a second terminal.

A new overhead frame is sent by taking the first service flow as a carrier, and the FlexE overhead frame in the first service flow is processed to form the new overhead frame.

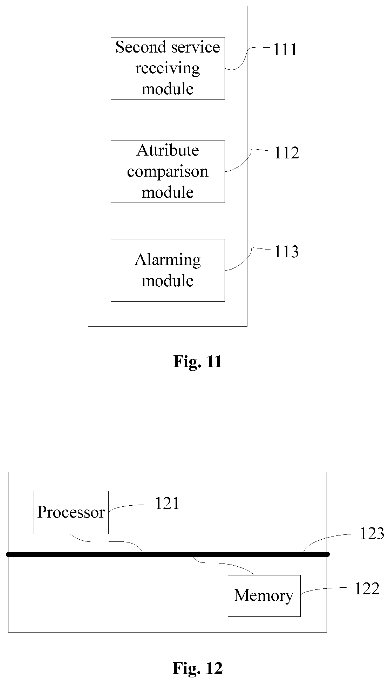

Referring to Fig. 11, Fig. 11 is a schematic composition diagram of a port configuration detection device. The device includes:
a second service receiving module 111, configured to receive a first service flow sent by a first terminal, wherein a FlexE overhead frame of the first service flow is added with first port attribute information of a CPRI port of the first terminal;
an attribute comparison module 112, configured to compare, in a case where a configuration detection strategy is met, second port attribute information with the first port attribute information of the CPRI port of the first terminal; and
an alarming module 113, configured to generate, in a case where the first port attribute information is inconsistent with the second port attribute information, an alarm.

The local terminal may send the service flow in which the port attribute information of the local terminal is written, and may alternatively or additionally receive the service flow in which the port attribute information of the remote terminal is written, i.e. the second service flow, sent by the remote terminal. The local terminal and the remote terminal may play different roles during a communication interaction, but the hardware configuration, software program and other contents of the local terminal and the remote terminal are unlimited and the functions for the local terminal and the remote terminal are generally consistent.

Since the port attribute information may include at least one of a port encapsulation type and an optical port line rate, the judgment of port attribute information consistency is also based on the port encapsulation type and the optical port line rate, respectively. If the port encapsulation types are consistent and the optical port line rates are consistent, the first port attribute information and the second port attribute information are considered to be consistent. If the port encapsulation types are inconsistent and/or the optical port line rates are inconsistent, the first port attribute information and the second port attribute information are considered to be inconsistent, and an alarm is generated.

In some embodiments, it is unnecessary to compare the port attribute information of both terminals at all times. In some exemplary implementations, the configuration detection strategy in the some embodiments includes at least one of the following:
port attribute information of a remote terminal is received for the first time;
port attribute information of a remote terminal is received for the first time after port attribute information of a local terminal is modified; and
a port configuration sequence number, contained in a service flow, of a remote terminal is inconsistent with a port configuration sequence number, which is cached locally, of the remote terminal.

When the port attribute information of the remote terminal is received for the first time, it represents that the remote terminal sends a service flow to the local terminal for the first time, and the port attribute information needs to be compared to judge whether the port attribute information of the local terminal and the port attribute information of the remote terminal are consistent because no interaction has been conducted before. Similarly, after the port attribute information of the local terminal is modified, the port attribute information of the local terminal may not be consistent with the port attribute information which has been interacted with the remote terminal before, and when the port attribute information of the remote terminal is received for the first time after such modification, the port attribute information may be compared. Alternatively, when the received port configuration sequence number of the remote terminal is inconsistent with the port configuration sequence number, which is cached locally, of the remote terminal, it represents that the configuration sequence number of the remote terminal is updated, and the port attribute information of the local terminal and the port attribute information of the remote terminal which are consistent before become inconsistent, and in such a case, the port attribute information of both terminals may be compared.

According to the port configuration detection device, a first service flow sent by a first terminal is received, a FlexE overhead frame of the first service flow is added with first port attribute information of a CPRI port of the first terminal, in a case where a configuration detection strategy is met, second port attribute information is compared with the first port attribute information of the CPRI port of the first terminal, and in a case where the first port attribute information is inconsistent with the second port attribute information, an alarm is generated. Therefore, a second terminal performs comparison according to port attribute information in service flows upon receiving the service flows and gives an alarm once there is a mismatching in the port attribute information in the service flows, thereby achieving detection and alarming of port configuration.

Referring to Fig. 12, Fig. 12 is a schematic composition diagram of a terminal. The terminal includes: a processor 121, a memory 122 and a communication bus 123.

The communication bus 123 is configured to implement a connection communication between the processor 121 and the memory 122.

The processor 121 is configured to execute a computer program stored in the memory 122 to implement the flow of the port configuration detection method in any one of the above embodiments of the present disclosure. Details are omitted here for simplicity.

Also provided is a computer-readable storage medium, which stores one or more computer programs. The computer programs are executed by one or more processors to implement the port configuration detection method in each of the foregoing embodiments. Details are omitted here for simplicity.

It is apparent that a person skilled in the art shall understand that all of the above-mentioned modules or operations in the present disclosure may be implemented by using a general calculation device, may be centralized on a single calculation device or may be distributed on a network composed of multiple calculation devices. Optionally, they may be implemented by using executable program codes of the calculation devices. Thus, they may be stored in a storage medium (a ROM/RAM, a magnetic disk, and an optical disc) and executed by the calculation devices, the shown or described operations may be executed in a sequence different from this sequence under certain conditions, or they are manufactured into each integrated circuit module respectively, or multiple modules or operations therein are manufactured into a single integrated circuit module. Therefore, the present disclosure is not limited to the combination of any specific hardware and software.

The above is a further detailed description of the present disclosure in connection with an exemplary implementation, and the specific implementation of the present disclosure is not limited to the description. The appended claims define the scope of protection of the present disclosure.

### Industrial Applicability

In the embodiments of the present disclosure, first port attribute information of a CPRI port of a first terminal is acquired; the first port attribute information of the CPRI port is added to a FlexE overhead frame in a first service flow; and the first service flow is sent to a second terminal. Therefore, by adding port attribute information to service flows, the second terminal can perform comparison according to the port attribute information in the service flows upon receiving the service flows and can give an alarm once there is a mismatching in the port attribute information in the service flows, thereby achieving detection and alarming of port configuration.

## Claims

1. A port configuration detection method performed by a first terminal, comprising:
acquiring (S401) first port attribute information of a Common Public Radio Interface, CPRI, port of the first terminal;
adding (S402) the first port attribute information of the CPRI port to a Flexible Ethernet, FlexE, overhead frame in a first service flow; and
sending (S403) the first service flow to a second terminal, wherein after sending (S403) the first service flow to the second terminal, the method further comprises:
receiving a second service flow sent by the second terminal;
in a case where a configuration detection strategy is met, comparing second port attribute information of a CPRI port in a FlexE overhead frame in the second service flow with the first port attribute information of the CPRI port of the first terminal; and
in a case where the first port attribute information is inconsistent with the second port attribute information, generating an alarm.

2. The port configuration detection method according to claim 1, wherein adding (S402) the first port attribute information of the CPRI port to the FlexE overhead frame in the first service flow comprises:
setting an extended field with a size of a preset number of bits in a reserved field of any overhead block of the FlexE overhead frame; and
writing the first port attribute information into the extended field.

3. The port configuration detection method according to claim 2, wherein writing the first port attribute information into the extended field comprises:
writing a port identification number of the first terminal, the first port attribute information and a port configuration sequence number of the first terminal into the extended field in sequence.

4. The port configuration detection method according to claim 3, wherein the port configuration sequence number of the first terminal is incremented each time the first port attribute information of the CPRI port of the first terminal is updated.

5. The port configuration detection method according to claim 1, wherein the configuration detection strategy comprises at least one of the following:
receiving port attribute information of the second terminal for the first time;
receiving port attribute information of the second terminal for the first time after port attribute information of the first terminal is modified; and
a port configuration sequence number, contained in a service flow, of the second terminal being inconsistent with a port configuration sequence number, which is cached locally, of the second terminal.

6. The port configuration detection method according to any one of claims 1 to 4, wherein the first port attribute information of the CPRI port comprises at least one of: a port encapsulation type of the first terminal and an optical port line rate of the first terminal.

7. The port configuration detection method according to any one of claims 1 to 4, wherein sending (S403) the first service flow to the second terminal comprises:
sending the first service flow to the second terminal through a relay terminal.

8. A port configuration detection method performed by a second terminal, comprising:
receiving (S601) a first service flow sent by a first terminal, wherein a Flexible Ethernet, FlexE, overhead frame of the first service flow is added with first port attribute information of a Common Public Radio Interface, CPRI, port of the first terminal;
in a case where a configuration detection strategy is met, comparing (S602) second port attribute information of a CPRI port of the second terminal with the first port attribute information of the CPRI port of the first terminal; and
in a case where the first port attribute information is inconsistent with the second port attribute information, generating (S603) an alarm.

9. The port configuration detection method according to claim 8, wherein the configuration detection strategy comprises at least one of the following:
receiving port attribute information of the second terminal for the first time;
receiving port attribute information of the second terminal for the first time after port attribute information of the first terminal is modified; and
a port configuration sequence number, contained in a service flow, of the second terminal being inconsistent with a port configuration sequence number, which is cached locally, of the second terminal.

10. The port configuration detection method according to claim 8 or claim 9, wherein the first port attribute information of the CPRI port comprises at least one of: a port encapsulation type of the first terminal and an optical port line rate of the first terminal, and the second port attribute information of the CPRI port comprises at least one of: a port encapsulation type of the second terminal and an optical port line rate of the second terminal.

11. The port configuration detection method according to claim 8 or claim 9, further comprising:
acquiring the second port attribute information of the CPRI port of the second terminal;
adding the second port attribute information of the CPRI port to a FlexE overhead frame in a second service flow; and
sending the second service flow to the first terminal.

12. A terminal, comprising a processor, a memory and a communication bus, wherein
the communication bus is configured to implement a connection communication between the processor and the memory; and
the processor is configured to execute a computer program stored in the memory to implement the operations of the port configuration detection method according to any one of claims 1 to 7, or the operations of the port configuration detection method according to any one of claims 8 to 11.

13. A computer-readable storage medium, storing one or more computer programs, wherein the computer programs are executed by one or more processors to implement the operations of the port configuration detection method according to any one of claims 1 to 7, or the operations of the port configuration detection method according to any one of claims 8 to 11.

## Patentansprüche

1. Verfahren zur Erkennung der Portkonfiguration, ausgeführt von einem ersten Terminal, umfassend: Erfassen (S401) von ersten Portattributinformationen eines Common Public Radio Interface (CPRI)-Ports des ersten Terminals;
Hinzufügen (S402) der ersten Portattributinformationen des CPRI-Ports zu einem Overhead-Frame von Flexible Ethernet (FlexE) in einem ersten Dienstfluss; und
Senden (S403) des ersten Dienstflusses an ein zweites Terminal, wobei das Verfahren nach dem Senden (S403) des ersten Dienstflusses an das zweite Terminal weiterhin umfasst:
Empfangen eines zweiten Dienstflusses, der vom zweiten Terminal gesendet wird;
im Fall, dass eine Konfigurationserkennungsstrategie erfüllt ist, Vergleichen der zweiten Portattributinformationen eines CPRI-Ports in einem FlexE-Overhead-Frame des zweiten Dienstflusses mit den ersten Portattributinformationen des CPRI-Ports des ersten Terminals; und
im Fall, dass die ersten Portattributinformationen nicht mit den zweiten Portattributinformationen übereinstimmen, Generieren eines Alarms.

2. Verfahren zur Erkennung der Portkonfiguration gemäß Anspruch 1, wobei das Hinzufügen (S402) der ersten Portattributinformationen des CPRI-Ports zum FlexE-Overhead-Frame im ersten Dienstfluss umfasst:
Setzen eines erweiterten Feldes mit einer Größe von einer voreingestellten Anzahl an Bits in einem reservierten Feld eines beliebigen Overhead-Blocks des FlexE-Overhead-Frames; und
Schreiben der ersten Portattributinformationen in das erweiterte Feld.

3. Verfahren zur Erkennung der Portkonfiguration gemäß Anspruch 2, wobei das Schreiben der ersten Portattributinformationen in das erweiterte Feld umfasst:
Schreiben einer Port-Identifikationsnummer des ersten Terminals, der ersten Portattributinformationen und einer Portkonfigurations-Seriennummer des ersten Terminals in das erweiterte Feld in dieser Reihenfolge.

4. Verfahren zur Erkennung der Portkonfiguration gemäß Anspruch 3, wobei die Portkonfigurations-Seriennummer des ersten Terminals bei jeder Aktualisierung der ersten Portattributinformationen des CPRI-Ports des ersten Terminals inkrementiert wird.

5. Verfahren zur Erkennung der Portkonfiguration gemäß Anspruch 1, wobei die Konfigurationserkennungsstrategie mindestens eines der folgenden umfasst:
erstmaliger Empfang von Portattributinformationen des zweiten Terminals;
erstmaliger Empfang von Portattributinformationen des zweiten Terminals nach Änderung der Portattributinformationen des ersten Terminals; und
eine Portkonfigurations-Seriennummer, enthalten in einem Dienstfluss des zweiten Terminals, stimmt nicht mit einer lokal zwischengespeicherten Portkonfigurations-Seriennummer des zweiten Terminals überein.

6. Verfahren zur Erkennung der Portkonfiguration gemäß einem der Ansprüche 1 bis 4, wobei die ersten Portattributinformationen des CPRI-Ports mindestens eines der folgenden umfassen: einen Port-Kapselungstyp des ersten Terminals und eine optische Portleitungsgeschwindigkeit des ersten Terminals.

7. Verfahren zur Erkennung der Portkonfiguration gemäß einem der Ansprüche 1 bis 4, wobei das Senden (S403) des ersten Dienstflusses an das zweite Terminal umfasst:
Senden des ersten Dienstflusses an das zweite Terminal über ein Relais-Terminal.

8. Verfahren zur Erkennung der Portkonfiguration, ausgeführt von einem zweiten Terminal, umfassend: Empfangen (S601) eines ersten Dienstflusses, gesendet von einem ersten Terminal, wobei ein Overhead-Frame von Flexible Ethernet (FlexE) des ersten Dienstflusses mit ersten Portattributinformationen eines Common Public Radio Interface (CPRI)-Ports des ersten Terminals ergänzt ist;
im Fall, dass eine Konfigurationserkennungsstrategie erfüllt ist, Vergleichen (S602) der zweiten Portattributinformationen eines CPRI-Ports des zweiten Terminals mit den ersten Portattributinformationen des CPRI-Ports des ersten Terminals; und
im Fall, dass die ersten Portattributinformationen nicht mit den zweiten Portattributinformationen übereinstimmen, Generieren (S603) eines Alarms.

9. Verfahren zur Erkennung der Portkonfiguration gemäß Anspruch 8, wobei die Konfigurationserkennungsstrategie mindestens eines der folgenden umfasst:
erstmaliger Empfang von Portattributinformationen des zweiten Terminals;
erstmaliger Empfang von Portattributinformationen des zweiten Terminals nach Änderung der Portattributinformationen des ersten Terminals; und
eine Portkonfigurations-Seriennummer, enthalten in einem Dienstfluss des zweiten Terminals, stimmt nicht mit einer lokal zwischengespeicherten Portkonfigurations-Seriennummer des zweiten Terminals überein.

10. Verfahren zur Erkennung der Portkonfiguration gemäß Anspruch 8 oder 9, wobei die ersten Portattributinformationen des CPRI-Ports mindestens eines der folgenden umfassen: einen Port-Kapselungstyp des ersten Terminals und eine optische Portleitungsgeschwindigkeit des ersten Terminals, und die zweiten Portattributinformationen des CPRI-Ports mindestens eines der folgenden umfassen: einen Port-Kapselungstyp des zweiten Terminals und eine optische Portleitungsgeschwindigkeit des zweiten Terminals.

11. Verfahren zur Erkennung der Portkonfiguration gemäß Anspruch 8 oder 9, weiterhin umfassend:
Erfassen der zweiten Portattributinformationen des CPRI-Ports des zweiten Terminals;
Hinzufügen der zweiten Portattributinformationen des CPRI-Ports zu einem FlexE-Overhead-Frame in einem zweiten Dienstfluss; und
Senden des zweiten Dienstflusses an das erste Terminal.

12. Ein Terminal, umfassend einen Prozessor, einen Speicher und einen Kommunikationsbus, wobei der Kommunikationsbus konfiguriert ist, eine Verbindungs-kommunikation zwischen dem Prozessor und dem Speicher umzusetzen; und
der Prozessor ist konfiguriert, ein im Speicher gespeichertes Computerprogramm auszuführen, um die Vorgänge des Verfahrens zur Erkennung der Portkonfiguration gemäß einem der Ansprüche 1 bis 7 oder die Vorgänge des Verfahrens zur Erkennung der Portkonfiguration gemäß einem der Ansprüche 8 bis 11 umzusetzen.

13. Ein computerlesbares Speichermedium, auf dem ein oder mehrere Computerprogramme gespeichert sind, wobei die Computerprogramme von einem oder mehreren Prozessoren ausgeführt werden, um die Vorgänge des Verfahrens zur Erkennung der Portkonfiguration gemäß einem der Ansprüche 1 bis 7
oder die Vorgänge des Verfahrens zur Erkennung der Portkonfiguration gemäß einem der Ansprüche 8 bis 11 umzusetzen.

## Revendications

1. Procédé de détection de configuration de port mis en œuvre par un premier terminal, comprenant : l'acquisition (S401) de premières informations d'attribut de port d'un port d'interface radio publique commune, CPRI, du premier terminal ;
l'ajout (S402) des premières informations d'attribut de port du port CPRI à une trame de surdébit Ethernet flexible, FlexE, dans un premier flux de service ; et
l'envoi (S403) du premier flux de service à un second terminal, le procédé comprenant en outre, après l'envoi (S403) du premier flux de service au second terminal :
la réception d'un second flux de service envoyé par le second terminal ;
dans le cas où une stratégie de détection de configuration est remplie, la comparaison des deuxièmes informations d'attribut de port d'un port CPRI dans une trame de surdébit FlexE du second flux de service avec les premières informations d'attribut de port du port CPRI du premier terminal ; et
dans le cas où les premières informations d'attribut de port ne sont pas cohérentes avec les deuxièmes informations d'attribut de port, la génération d'une alarme.

2. Le procédé de détection de configuration de port selon la revendication 1, dans lequel l'ajout (S402) des premières informations d'attribut de port du port CPRI à la trame de surdébit FlexE dans le premier flux de service comprend :
la définition d'un champ étendu d'une taille correspondant à un nombre prédéfini de bits dans un champ réservé de tout bloc de surdébit de la trame de surdébit FlexE ; et
l'écriture des premières informations d'attribut de port dans le champ étendu.

3. Le procédé de détection de configuration de port selon la revendication 2, dans lequel l'écriture des premières informations d'attribut de port dans le champ étendu comprend :
l'écriture d'un numéro d'identification de port du premier terminal, des premières informations d'attribut de port et d'un numéro de séquence de configuration de port du premier terminal dans le champ étendu, dans cet ordre.

4. Le procédé de détection de configuration de port selon la revendication 3, dans lequel le numéro de séquence de configuration de port du premier terminal est incrémenté à chaque mise à jour des premières informations d'attribut de port du port CPRI du premier terminal.

5. Le procédé de détection de configuration de port selon la revendication 1, dans lequel la stratégie de détection de configuration comprend au moins l'un des éléments suivants :
la réception pour la première fois d'informations d'attribut de port du second terminal ;
la réception pour la première fois d'informations d'attribut de port du second terminal après modification des informations d'attribut de port du premier terminal ; et
un numéro de séquence de configuration de port, contenu dans un flux de service, du second terminal n'étant pas cohérent avec un numéro de séquence de configuration de port, mis en cache localement, du second terminal.

6. Le procédé de détection de configuration de port selon l'une quelconque des revendications 1 à 4, dans lequel les premières informations d'attribut de port du port CPRI comprennent au moins l'un des éléments suivants : un type d'encapsulation de port du premier terminal et un débit de ligne de port optique du premier terminal.

7. Le procédé de détection de configuration de port selon l'une quelconque des revendications 1 à 4, dans lequel l'envoi (S403) du premier flux de service au second terminal comprend :
l'envoi du premier flux de service au second terminal via un terminal relais.

8. Procédé de détection de configuration de port mis en œuvre par un second terminal, comprenant : la réception (S601) d'un premier flux de service envoyé par un premier terminal, une trame de surdébit Ethernet flexible, FlexE, du premier flux de service étant ajoutée avec des premières informations d'attribut de port d'un port d'interface radio publique commune, CPRI, du premier terminal ;
dans le cas où une stratégie de détection de configuration est remplie, la comparaison (S602) des deuxièmes informations d'attribut de port d'un port CPRI du second terminal avec les premières informations d'attribut de port du port CPRI du premier terminal ; et
dans le cas où les premières informations d'attribut de port ne sont pas cohérentes avec les deuxièmes informations d'attribut de port, la génération (S603) d'une alarme.

9. Le procédé de détection de configuration de port selon la revendication 8, dans lequel la stratégie de détection de configuration comprend au moins l'un des éléments suivants :
la réception pour la première fois d'informations d'attribut de port du second terminal ;
la réception pour la première fois d'informations d'attribut de port du second terminal après modification des informations d'attribut de port du premier terminal ; et
un numéro de séquence de configuration de port, contenu dans un flux de service, du second terminal n'étant pas cohérent avec un numéro de séquence de configuration de port, mis en cache localement, du second terminal.

10. Le procédé de détection de configuration de port selon la revendication 8 ou 9, dans lequel les premières informations d'attribut de port du port CPRI comprennent au moins l'un des éléments suivants : un type d'encapsulation de port du premier terminal et un débit de ligne de port optique du premier terminal, et les deuxièmes informations d'attribut de port du port CPRI comprennent au moins l'un des éléments suivants : un type d'encapsulation de port du second terminal et un débit de ligne de port optique du second terminal.

11. Le procédé de détection de configuration de port selon la revendication 8 ou 9, comprenant en outre :
l'acquisition des deuxièmes informations d'attribut de port du port CPRI du second terminal ;
l'ajout des deuxièmes informations d'attribut de port du port CPRI à une trame de surdébit FlexE dans un second flux de service ; et
l'envoi du second flux de service au premier terminal.

12. Un terminal, comprenant un processeur, une mémoire et un bus de communication, le bus de communication étant configuré pour réaliser une communication de connexion entre le processeur et la mémoire ; et
le processeur étant configuré pour exécuter un programme informatique stocké dans la mémoire afin de mettre en œuvre les opérations du procédé de détection de configuration de port selon l'une quelconque des revendications 1 à 7, ou les opérations du procédé de détection de configuration de port selon l'une quelconque des revendications 8 à 11.

13. Un support de stockage lisible par ordinateur, stockant un ou plusieurs programmes informatiques, les programmes informatiques étant exécutés par un ou plusieurs processeurs afin de mettre en œuvre les opérations du procédé de détection de configuration de port selon l'une quelconque des revendications 1 à 7, ou les opérations du procédé de détection de configuration de port selon l'une quelconque des revendications 8 à 11.
